# FASCICULE DE BREVET EUROPEEN

(11) **EP 3 931 225 B1**
(45) Date de publication et mention de la délivrance du brevet: **25.06.2025**
(21) Numéro de dépôt: 20719673.4
(22) Date de dépôt: 26.02.2020
(51) Int. Cl.: C08B 30/12, A23L 29/212, C08L 3/02

(54) **PROCÉDÉ DE PRÉPARATION D'UN AMIDON THERMIQUEMENT MODIFIÉ**
VERFAHREN ZUR HERSTELLUNG EINER WÄRMEMODIFIZIERTEN STÄRKE
METHOD FOR PREPARING A HEAT-MODIFIED STARCH

(30) Priorité: 27.02.2019 FR 1902016; 18.06.2019 FR 1906521; 18.07.2019 FR 1908132
(43) Date de publication de la demande: 05.01.2022
(73) Titulaire: ROQUETTE FRERES, 62136 Lestrem (FR)
(72) Inventeur: QUETTIER, Claude, 59130 LAMBERSART (FR); WIATZ, Vincent, 59840 PREMESQUES (FR); BOCK, Solène, 59130 LAMBERSART (FR); LEGRAND, Jacques, 62131 VERQUIN (FR)
(74) Mandataire: Plasseraud IP
(86) Numéro de dépôt international: PCT/FR2020/050380
(87) Numéro de publication internationale: WO 2020/174189

(56) Documents cités:
- WO-A1-2014/042537
- WO-A1-96/03891
- FR-A1- 3 078 334
- FR-A1- 3 095 816

## Description

L'invention se rapporte à la production d'amidon thermiquement modifié, amidon dont la viscosité est stabilisée suite à ce traitement thermique. De tels amidons thermiquement modifiés trouvent alors une utilisation comme agents texturants et épaississants dans de nombreuses applications alimentaires, notamment dans les soupes, sauces, dans les desserts comme les yaourts, les laits fermentés brassés, yaourts thermisés, les crèmes dessert, mais aussi les boissons, les plats préparés, les préparations à base de viande ou de poisson, tel que le surimi.

L'invention se rapporte également à l'utilisation de ces amidons thermiquement modifiés, en association avec des dextrines, comme agent d'enrobage pour la préparation de revêtement transparent de légumes (frites de pommes de terre), de produits de viande ou encore de pâtes pour pizzas, beignets ou fonds de tarte, snacks, croquettes, céréales ou agents de panage..

### Contexte de l'invention

Synthétisé par voie biochimique, source d'hydrates de carbone, l'amidon est l'une des matières organiques les plus répandues du monde végétal, où il constitue la réserve nutritionnelle des organismes.

Depuis toujours, les amidons sont utilisés dans l'industrie alimentaire, non seulement comme ingrédient nutritif mais également pour leurs propriétés technologiques, comme agent épaississant, liant, stabilisant ou gélifiant.

Par exemple, les amidons natifs sont utilisés dans les préparations nécessitant une cuisson. L'amidon de maïs, notamment, est la base des « poudres à flan ».

Comme il est riche en amylose, il rétrograde et donc gélifie fortement. Il permet d'obtenir des flans fermes après cuissons et refroidissement. Il convient également pour les crèmes pâtissières.

Mais celles-ci ne peuvent pas entrer dans les pâtisseries destinées à être congelées car, à la décongélation, le phénomène de synérèse, qui se traduit par une expulsion d'eau, détruit la texture de la crème.

Ainsi, à l'état natif, l'amidon est d'application limitée en raison de la synérèse, mais également en raison de :
- sa faible résistance aux contraintes de cisaillement et aux traitements thermiques,
- sa faible processabilité et
- sa faible solubilité dans des solvants organiques communs.

De ce fait, pour répondre aux besoins technologiques exigeants d'aujourd'hui, les propriétés de l'amidon doivent être optimisées par diverses méthodes dites de « modification ».

Ces principales modifications visent alors à adapter l'amidon aux contraintes technologiques résultant de la cuisson, mais aussi de la congélation/décongélation, de l'appertisation ou de la stérilisation, et à le rendre compatible avec une alimentation moderne (micro-ondes, préparations instantanées, "hautes températures"...).

La modification de l'amidon vise alors à corriger un ou certains des défauts mentionnés ci-avant, améliorer ainsi sa polyvalence et satisfaire la demande des consommateurs.

Les techniques de modification de l'amidon ont été globalement classées en quatre catégories : physiques, chimiques, enzymatiques et génétiques, la finalité étant de produire divers dérivés avec des propriétés physicochimiques optimisées.

Les modifications chimiques et physiques sont celles le plus souvent mises en œuvre.

Le traitement chimique consiste à introduire des groupes fonctionnels dans l'amidon, ce qui altère remarquablement ses propriétés physico-chimiques. De telles modifications des amidons natifs granulaires altèrent en effet profondément le comportement en gélatinisation, collage et rétrogradation.

Généralement, ces modifications sont réalisées par dérivatisation chimique, comme l'estérification, l'éthérification, la réticulation ou le greffage.

Cependant, les modifications chimiques sont moins recherchées par le consommateur dans les applications alimentaires (également pour des raisons d'environnement), même si certaines modifications sont considérées comme sûres.

Des modifications physiques variées sont de ce fait proposées, par exemple :
- le traitement par la chaleur humide (terme anglosaxon de « Heat Moisture Treatment » ou HMT), consistant à traiter l'amidon à des niveaux d'humidité contrôlée (22-27 %) et à haute température, pendant 16 heures, afin d'altérer la structure et les propriétés physicochimiques de l'amidon ;
- la « recuite » (terme anglosaxon d' « annealing »), consistant à traiter l'amidon en excès d'eau, à des températures en-deçà de la température de gélatinisation, afin d'approcher la température de transition vitreuse ;
- le traitement à ultra haute pression (terme anglosaxon de « High Pressure Processing » ou HPP), par lequel on hydrate les régions amorphes du granule d'amidon, ce qui conduit à une distorsion des parties cristallines du granule et favorise l'accessibilité desdites régions cristallines à l'eau ;
- le traitement au plasma de décharge luminescente, qui génère, à température ambiante, des électrons à haute énergie et d'autres espèces hautement actives. Appliqués à l'amidon, ces espèces actives excitent les groupes chimiques de l'amidon et provoquent une réticulation importante des macromolécules ;
- le traitement de pression osmotique (d'acronyme anglosaxon « OPT »), réalisé en présence de solutions à haute teneur en sels. L'amidon est suspendu dans du sulfate de sodium afin de produire une suspension uniforme.

L'amidon passe du type B au type A après traitement, en acquérant ainsi une température de gélatinisation qui augmente de manière significative ;
- le traitement par « inhibition thermique ». En toute généralité, l'inhibition thermique s'entend de la déshydratation d'un amidon jusqu'à atteindre l'état anhydre ou substantiellement anhydre (i.e. < 1 % d'humidité), puis un traitement thermique à plus de 100°C pendant une période de temps suffisante pour « inhiber » l'amidon, en l'occurrence ici pour lui conférer des propriétés d'amidons réticulés. Il est par ailleurs nécessaire de placer l'amidon dans des conditions de pH au moins neutre à préférentiellement alcalin avant de procéder à l'étape de déshydratation poussée.

Une alternative de traitement par « inhibition thermique » a été proposée en phase solvant, qui consiste à chauffer un amidon granulaire non prégélatinisé en milieu alcoolique, en présence d'une base et de sels, à une température de 120° à 200°C, pendant 5 minutes à 2 heures.

Quoi qu'il en soit, le processus d'inhibition thermique conduit alors à obtenir une pâte d'amidon présentant des propriétés de résistance accrue à la rupture de viscosité, et une texture non cohésive.

Le domaine technique auquel se rattache l'invention est celui du traitement par inhibition thermique de l'amidon, sans solvant hydro-alcoolique.

Dans ce domaine technique particulier, on peut citer plus particulièrement l'US 6.221.420 qui décrit un amidon thermiquement inhibé, obtenu par déshydratation puis traitement thermique.

Les principales étapes sont :
- la déshydratation de l'amidon à une teneur en eau inférieure à 1% réalisée à une température comprise entre 100 et 125°C, puis
- le traitement thermique de l'amidon sec ainsi obtenu, à environ 140°C, dans un lit fluidisé réactionnel, pendant une durée de l'ordre de 20 heures.

De manière préférentielle, avant l'étape de déshydratation de l'amidon, il est recommandé de procéder à une étape d'alcalinisation de l'amidon, permettant de porter le pH de la suspension d'amidon à une valeur comprise entre 7 et 10, de préférence comprise entre 8 et 10.

A ce stade, avant l'étape de déshydratation proprement dite qui précède l'étape d'inhibition, la teneur en eau de l'amidon (telle qu'exemplifiée) est alors comprise entre 8 et 10 %.

L'US 2001/0017133 décrit un procédé similaire, dans lequel l'amidon est également déshydraté en dessous de 125°C avant que le processus d'inhibition ne soit démarré (à une température de plus de 100°C, préférentiellement compris entre 120 et 180°C, plus préférentiellement comprise entre 140 et 160°C) pendant une durée jusqu'à 20 heures, préférentiellement comprise entre 3 heures 30 et 4 heures 30.

Avant l'étape de déshydratation, l'étape d'alcalinisation classique conduit à une suspension d'amidon présentant une valeur de pH comprise entre 7,5 et 11,2, de préférence comprise entre 8 et 9,5%, et une teneur en eau compris entre 2 et 15 %.

Une variante a été proposé dans la demande de brevet WO 2014/042537, variante qui porte sur un chauffage d'un amidon alcalin à des températures comprises entre 140 et 190°C, en veillant à ce que le procédé d'inhibition soit initié et conduit en présence d'eau en quantité suffisante, soit plus de 1% d'eau.

En d'autres termes, ce procédé recommande d'inhiber thermiquement un amidon préalablement alcalinisé sans procéder à une étape de déshydratation.

La préparation d'amidon ou l'amidon est ainsi amenée à un pH compris entre 9,1 et 11,2, préférentiellement à une valeur de l'ordre de 10, et l'humidité est ajustée entre 2 et 22 %, préférentiellement entre 5 et 10%.

L'inhibition thermique est réalisée ensuite directement sur cette poudre ou cet amidon, à une température comprise entre 140 et 190°C, préférentiellement entre 140 et 180°C, pendant une durée de 30 minutes.

De tout ce qui précède, on constate que les procédés d'inhibition thermique mis en œuvre pour stabiliser la viscosité des amidons mettent en jeu des procédés nécessitent :
- la mise en œuvre de longues durées de traitement, i.e. jusqu'à 20 heures, et
- le contrôle de la teneur en eau des amidons à traiter, en fonction des procédés proposés dans l'état de l'art, que ce soit à des valeurs de moins de 1 % ou au contraire entre 2 et 22%.

Il demeure donc un besoin de disposer d'un procédé original d'inhibition de l'amidon, permettant de réduire encore le temps de réaction, et sans qu'il ne soit nécessaire de contrôler la teneur en eau de l'amidon à « inhiber thermiquement ».

### Description de l'invention

Ainsi, l'invention concerne un procédé de production d'un amidon thermiquement modifié à partir d'un lait d'amidon comprenant les étapes consistant à :
(i) préparer un lait d'amidon présentant une matière sèche comprise entre 30 et 40 %, de préférence entre 35 et 37 % en poids,
(ii) ajouter une solution d'un agent alcalin à une concentration massique comprise entre 25 et 35 %, de préférence de 30 % de manière à obtenir une conductivité sur le lait comprise entre 4 et 7 mS/cm,
(iii) assurer un temps de contact compris entre 0,5 et 2 heures,
(iv) filtrer et sécher le lait d'amidon de manière à ce que la conductivité de l'amidon séché et remis en suspension à 20% de matière sèche soit comprise entre 0,7 et 2,5 mS/cm,
(v) chauffer ledit amidon séché de manière à le porter à une température de plus de 180°C pendant un temps de séjour compris entre 10 et 40 minutes, plus préférentiellement encore entre 15 et 35 minutes.

L'amidon à utiliser dans le procédé de l'invention peut être de toute origine, par exemple le maïs, le maïs waxy, l'amylomaïs, le blé, le blé waxy, les légumineuses telles que le pois et la féverole, la pomme de terre, la pomme de terre waxy, le tapioca, le tapioca waxy, le riz, le konjac, etc.

Par « féverole », on entend le groupe des plantes annuelles de l'espèce *Vicia faba,* appartenant au groupe des légumineuses de la famille des *Fabaceae,* sous-famille des *Faboideae,* tribu des *Fabeae.* On distingue les variétés Minor et Major. Dans la présente invention, les variétés sauvages et celles obtenues par génie génétique ou sélection variétales sont toutes d'excellentes sources.

De manière préférentielle, on choisira de l'amidon de maïs, plus particulièrement de l'amidon de maïs waxy (à haute teneur en amylopectine), la fécule de pomme de terre, le manioc, le pois et la féverole, comme il sera exemplifié ci-après.

L'agent alcalin est préférentiellement choisi dans le groupe constitué de l'hydroxyde de sodium, le carbonate de sodium, le pyrophosphate tétrasodique, l'orthophosphate d'ammonium, l'orthophosphate disodique, le phosphate trisodique, le carbonate de calcium, l'hydroxyde de calcium, le carbonate de potassium, et hydroxyde de potassium pris seul ou en combinaison, plus préférentiellement encore le carbonate de sodium.

Le procédé conforme à l'invention demande tout d'abord la préparation d'un lait d'amidon à une matière sèche comprise entre 30 et 40 %, de préférence entre 35 et 37 % en poids. Comme il sera exemplifié ci-après, la matière sèche est fixée à 36,5 % en poids.

L'étape suivante consiste alors à contrôler l'imprégnation alcaline de l'amidon en ajoutant l'agent alcalin sous forme d'une solution à une concentration massique comprise entre 25 et 35 %, de préférence de 30 % pour obtenir une conductivité, sur le lait, comprise entre 4 et 7 mS/cm.

La société Demanderesse a en effet trouvé que :
- l'ajout de l'agent alcalin, plus particulièrement le carbonate de sodium directement sur l'amidon en phase lait permet d'atteindre plus efficacement les hautes valeurs de pH recherchées (sont entre 10,2 et 10,8, de préférence comprises entre 10,5 et 10,65) qu'une pulvérisation de carbonate de sodium sur l'amidon en phase sèche, au sens où l'ajout en phase lait permet une meilleure migration du carbonate à l'intérieur des granules d'amidon en comparaison à une imprégnation en poudre.

Par ailleurs, comme l'imprégnation en phase poudre nécessite d'ajuster l'humidité de l'amidon à des valeurs élevées, une partie de l'énergie dédiée au traitement du produit sera donc perdue pour assurer l'évaporation de l'eau résiduelle.
- l'ajout de l'agent alcalin en solution à partir d'une solution à une concentration massique comprise entre 25 et 35 %, de préférence de 30 % permet une dissolution totale de l'agent alcalin dans le lait d'amidon, un ajustement de pH plus rapide et plus fin, et d'éviter un dépôt d'agent alcalin solide dans le fond du réacteur en cas de non solubilisation.

L'effet technique le plus important est ici d'amener à un temps de contact compris entre 0,5 et 2 heures.
- le contrôle du niveau d'imprégnation de l'amidon via des mesures de conductivité permet d'atteindre la précision requise pour lesdites hautes valeurs de pH.

L'étape suivante conduit à filtrer et sécher le lait d'amidon de manière à ce que la conductivité de l'amidon séché et remis en suspension à 20% de matière sèche soit comprise entre 0,7 et 2,5 mS/cm.

La dernière étape consiste à chauffer l'amidon sec ainsi obtenu de manière à le porter à une température de plus de 180°C pendant un temps de séjour compris entre 10 et 40 minutes, plus préférentiellement encore entre 15 et 35 minutes.

La montée en température lors de l'étape (v) de l'amidon sec obtenu à l'étape (iv) est préférentiellement réalisée dans des dispositifs de type turboréacteurs continus, pour lesquels la température de consigne est fixée à plus de 190°C, de préférence comprise entre 195 et 240 °C, et le delta T, défini comme la différence de température entre la température de consigne et la température du produit en sortie du réacteur, est compris entre 15 et 25 °C.

L'invention concerne également un amidon thermiquement modifié susceptible d'être obtenu selon le procédé décrit ci-dessus.

Les amidons thermiquement modifiés selon l'invention seront avantageusement utilisés, en fonction de leurs propriétés respectives, en tant qu'agent épaississant ou agent texturant dans des applications alimentaires, notamment dans les soupes, sauces, boissons et plats préparés et dans les desserts comme les yaourts et laits fermentés brassés et les yaourts thermisés.

Par leurs propriétés texturantes et gélifiantes, ils trouveront également de nombreuses applications dans les domaines aussi variés que :
- sauces et soupes acides (pasteurisées et stérilisées),
- sauces pour pâtes au jus de viande,
- desserts comme les yaourts, les préparations de fruits pour yaourts, les laits fermentés brassés, les yaourts thermisés, les crèmes dessert,
- mayonnaise et vinaigrette à chaud,
- garniture de tarte, fruit ou garniture de viande ou de viande stable et sucrée ou salée, dîners (plats cuisinés courte durée de conservation),
- pudding (mélange sec à cuire),
- pots de bébé / préparations pour nourrissons,
- boissons,
- plats préparés, les préparations à base de viande ou de poisson, tel que le surimi.
- aliments pour animaux
- préparation de revêtement transparent de légumes, tels que par exemple des frites de pommes de terre, de produits de viande ou encore de pâtes pour pizzas, beignets ou fonds de tarte, snacks, croquettes, céréales ou agents de panage.

Pour cette dernière application, ces enrobages (terme technique anglosaxon de « coatings ») ou de revêtement transparent (terme technique anglosaxon de « clearcoating ») sont conçus pour améliorer la conservation et la croustillance des frites après leur cuisson.

Les recettes classiques d'enrobage comprennent une pluralité de constituants plus ou moins complexes, notamment :
- une farine, notamment de riz
- un amidon chimiquement modifié de type amidon hautement réticulé phosphate (agent de réticulation : trimétaphosphate de sodium) de degré de substitution de 0,4 % maximum
- un amidon natif
- une dextrine.

Il pourra être choisi une recette telle celle proposée par la société Demanderesse dans son brevet EP 1.557.093, où ces composants amidon chimiquement modifié, amidon natif et dextrine sont issus de légumineuses, notamment du pois.

L'invention sera mieux comprise à l'aide des exemples qui suivent, lesquels se veulent illustratifs et non limitatifs.

### Matériel et méthodes

### Mesure de la conductivité

La méthode mise en œuvre ici est adaptée de la Pharmacopée Européenne - édition officielle en vigueur - Conductivité (§ 2.2.38).

### Matériels :

Conductivimètre électronique KNICK 703 équipé également de sa cellule de mesure et vérifié selon le mode opératoire décrit dans le manuel d'instructions qui s'y rapporte.

### Mode opératoire :

On prépare une solution contenant 20 g d'échantillon sous forme de poudre et 80 g d'eau distillée présentant une résistivité supérieure à 500 000 ohms.cm.

On effectue la mesure, à 20°C, à l'aide du conductivimètre en se reportant au mode opératoire indiqué dans le manuel d'utilisation de l'appareil.

Les valeurs sont exprimées en microSiemens/cm (µS/cm) ou miliSiemens/cm (mS/cm).

### Mesure de la viscosité d'une suspension d'amidon à l'aide du Rapid Viscosimeter Analyser (RVA)

Cette mesure est réalisée à pH acide (entre 2,5 et 3,5) dans des conditions de concentration déterminées et suivant un profil d'analyse température/temps adapté.

Deux solutions tampons sont préparées :

### Tampon A

Dans un bécher de 1 litre, contenant 500 ml d'eau déminéralisée, on ajoute
- 91,0 g d'acide citrique monohydrate (pureté > 99,5 %) et homogénéise,
- 33,0 g de chlorure de sodium (pureté > 99,5 %), et homogénéise jusqu'à dissolution complète,
- 300,0 g de soude 1N.
On transvase dans une fiole jaugée de 1 L et complète avec de l'eau déminéralisé à 1 L.

### Tampon B

On mélange 100 g de Tampon A avec 334 ,0 g d'eau déminéralisée.

On prépare le produit à analyser de la manière suivante :
Une masse de 1,37 g du produit sec à analyser ainsi obtenu est introduite directement dans le bol du viscosimètre, et on introduit de la solution Tampon B jusqu'à l'obtention d'une masse égale à 28,00 ± 0,01 g. On homogénéise à la pale d'agitation du Rapid Visco Analyser (RVA-NewPort Scientific).

Le profil d'analyse temps/ température et vitesse dans le RVA est alors réalisé comme suit :

**[Tableau 1]**

| Temps hh:mm:ss | Température °C | Vitesse de rotation Tour/min (RPM) |
|---|---|---|
| 00:00:00 | 50 | 100 |
| 00:00:10 | 50 | 500 |
| 00:00:20 | 50 | 960 |
| 00:00:30 | 50 | 160 |
| 00:01:00 | 50 | 160 |
| 00:05:00 | 92 | 160 |
| 00:17:00 | 92 | 160 |
| 00:20:00 | 50 | 160 |

| | | |
|---|---|---|
| Fin de test : 00:20:05 (hh:mm:ss) Température initiale: 50°C ± 0,5°C Intervalle d'acquisition des données : 2 secondes Sensibilité: basse (low) | | |

Les résultats des mesures sont donnés en RVU (unité utilisée pour exprimer la viscosité obtenue sur le RVA), sachant que 1 unité RVU = 12 cPoises (cP).

Pour rappel, 1 cP = 1 mPa.s.

Les résultats seront donc présentés en mPa.s.

Les mesures seront de viscosité réalisées « au pic », i.e. valeur de viscosité maximale entre 4 et 6 minutes, et « à la chute », i.e. la différence entre la valeur de la viscosité au pic et celle mesurée à 17 minutes.

### Exemples

### Exemple 1 : Préparation d'amidons thermiquement modifiés « A » à partir d'amidon de maïs waxy.

1)L'alcalinisation de l'amidon de maïs waxy est conduite selon les étapes suivantes :
   - Préparer un lait d'amidon de maïs waxy à 36,5% en poids de matière sèche (MS)
   - Préparer une solution de carbonate de sodium à 30% de concentration massique et chauffer vers 40-50°C pour favoriser la dissolution du carbonate ;
   - Ajouter la solution de carbonate de sodium à 30% de concentration massique de manière à obtenir une conductivité sur le lait comprise entre 4 et 7 mS/cm;
   - Assurer un temps de contact de 0,5h ;
   - Filtrer et sécher l'amidon de manière à ce que la conductivité finale sur la poudre remise en suspension à 20% en poids de MS soit de 1,9 mS/cm.
2)Traitement thermique

Le produit ainsi obtenu est traité thermiquement dans des turboréacteurs continus de type VOMM en série, dont la température de consigne est fixée à 200°C et configurés pour faire subir au produit un temps de séjour de 20 min, et de manière à ce que la différence de température entre la consigne et la température du produit en sortie du réacteur, qu'on appelle Delta T, soit d'une valeur de l'ordre de 17°C.

Paramètres de process

**[Tableau 2]**

| Exp | Conductivité sur produit après imprégnation remis à 20% en poids MS en mS/cm | Humidité du produit avant traitement thermique en % | Delta T | T°C consigne | Temps de séjour (min) |
|---|---|---|---|---|---|
| A | 1,9 | 11,8 | 17 | 200 | 20 |

Les mesures de viscosité RVA sont réalisées et sont présentées dans le tableau ci-dessous.

### Résultats

**[Tableau 3]**

| Exp | RVA Pic (mPa.s) | RVA Chute (mPa.s) |
|---|---|---|
| A | 530 | 93 |

### Exemple 2 : Préparation d'amidons thermiquement modifiés « C » à partir d'amidon de maïs waxy.

1 )L'alcalinisation de l'amidon de maïs waxy est conduite selon les étapes suivantes :
   - Préparer un lait d'amidon de maïs waxy à 36,5% en poids de matière sèche (MS)
   - Préparer une solution de carbonate de sodium à 30% de concentration massique et chauffer vers 40-50°C pour favoriser la dissolution du carbonate ;
   - Ajouter la solution de carbonate de sodium à 30% de concentration massique de manière à obtenir une conductivité sur le lait comprise entre 4 et 7 mS/cm;
   - Assurer un temps de contact de 0,5h ;
   - Filtrer et sécher l'amidon de manière à ce que la conductivité finale sur la poudre remise en suspension à 20% en poids de MS soit de 1,4 mS/cm 2)Traitement thermique

Le produit ainsi obtenu est traité thermiquement dans des turboréacteurs continus de type VOMM en série, dont la température de consigne est fixée à 200°C et configurés pour faire subir au produit un temps de séjour de 25 min, et de manière à ce que la différence de température entre la consigne et la température du produit en sortie du réacteur, qu'on appelle Delta T, soit d'une valeur de l'ordre de 23°C.

### Paramètres de process

**[Tableau 4]**

| Exp | Conductivité sur produit après imprégnation remis à 20% en poids MS en mS/cm | Humidité du produit avant traitement thermique en % | Delta T | T°C consigne | Temps de séjour (min) |
|---|---|---|---|---|---|
| C | 1,4 | 11,6 | 23 | 200 | 25 |

Les mesures de viscosité RVA sont réalisées et sont présentée dans le tableau ci-dessous.

### Résultats

**[Tableau 5]**

| Exp | RVA Pic (mPa.s) | RVA Chute (mPa.s) |
|---|---|---|
| C | 914 | -70 |

### Exemple 3 : Préparation d'amidons thermiquement modifiés « G » à partir d'amidon de pois.

1)L'alcalinisation de l'amidon de pois est conduite selon les étapes suivantes :
   - Préparer un lait d'amidon de pois à 33% en poids de matière sèche (MS)
   - Préparer une solution de carbonate de sodium à 30% de concentration massique et chauffer vers 40-50°C pour favoriser la dissolution du carbonate ;
   - Ajouter la solution de carbonate de sodium à 30% de concentration massique de manière à obtenir une conductivité sur le lait comprise entre 4 et 6 mS/cm;
   - Assurer un temps de contact de 0,5h ;
   - Filtrer et sécher l'amidon de manière à ce que la conductivité finale sur la poudre remise en suspension à 20% en poids de MS soit de 0,9 mS/cm 2)Traitement thermique

Le produit ainsi obtenu est traité thermiquement dans des turboréacteurs continus de type VOMM en série, dont la température de consigne est fixée à 200°C et configurés pour faire subir au produit un temps de séjour de 20 min, et de manière à ce que la différence de température entre la consigne et la température du produit en sortie du réacteur, qu'on appelle Delta T, soit d'une valeur de l'ordre de 20°C.

### Paramètres de process

**[Tableau 6]**

| Exp | Conductivité sur produit après imprégnation remis à 20% en poids MS en mS/cm | Humidité du produit avant traitement thermique en % | Delta T | T°C consigne | Temps de séjour (min) |
|---|---|---|---|---|---|
| G | 0,9 | 10,5 | 20 | 200 | 20 |

Les mesures de viscosité RVA sont réalisées et sont présentées dans le tableau ci-dessous.

### Résultats

**[Tableau 7]**

| Exp | RVA Pic (mPa.s) | RVA Chute (mPa.s) |
|---|---|---|
| G | 60 | -132 |

### Exemple 4 : Préparation d'amidons thermiquement modifiés « H-1 » et « H-2 » à partir de l'amidon de féverole.

1)L'alcalinisation de l'amidon de fèverole est conduite selon les étapes suivantes :
   - Préparer un lait d'amidon de fèverole à 33% en poids de matière sèche (MS) ;
   - Préparer une solution de carbonate de sodium à 30% de concentration massique et chauffer vers 40-50°C pour favoriser la dissolution du carbonate ;
   - Ajouter la solution de carbonate de sodium à 30% en poids de concentration massique au lait d'amidon, de manière à obtenir une conductivité sur le lait comprise entre 4 et 6 mS/cm ;
   - Assurer un temps de contact de 0,5h ;
   - Filtrer et sécher l'amidon de manière à ce que la conductivité finale sur la poudre remise en suspension à 20% en poids de MS soit compris entre 1.5 et 2mS 2)Traitement thermique

Le produit ainsi obtenu est traité thermiquement dans des turboréacteurs continus de type VOMM en série, dont la température de consigne est fixée à 210°C et configurés pour faire subir au produit un temps de séjour de l'ordre de 13 - 25 min, et de manière à ce que la différence de température entre la consigne et la température du produit en sortie du réacteur, qu'on appelle Delta T, soit d'une valeur de l'ordre de 21-25°C.

### Paramètres de process

**[Tableau 8]**

| Exp | Conductivité sur produit après imprégnation remis en suspension à 20% en poids MS en mS/cm | Humidité du produit avant traitement thermique en % | Delta T | T°C consigne | Temps de séjour (min) |
|---|---|---|---|---|---|
| Base amidon de fèverole | 0,133 | 8 | 0 | 0 | 0 |
| H-1 | 1,9 | 14 | 24 | 210 | 13 |
| H-2 | 1,9 | 14 | 23.5 | 210 | 25 |

Les mesures de viscosité RVA sont réalisées et sont présentées dans le tableau ci-dessous.

### Résultats :

**[Tableau 9]**

| Essais | RVA Chute (mPa.s) | RVA Pic (mPa.s) |
|---|---|---|
| Base amidon de fèverole | 82 | 323 |
| H-1 | -79 | 229 |
| H-2 | -47 | 45 |

Les amidons thermiquement modifiés préparés à partir d'amidon de féverole H-1 et H-2 présentent une stabilité améliorée durant le process d'utilisation par rapport à l'amidon natif : moins de phénomènes de prise en viscosité et de rétrogradation sont observés lors de l'utilisation de ces amidons thermiquement modifiés.

### Exemple 5 : Préparation d'amidons thermiquement modifiés « I-1 » et « I-2 » à partir de fécule de pomme de terre

1 )L'alcalinisation de la fécule de pomme de terre est conduite selon les étapes suivantes :
   - Préparer un lait de fécule de pomme de terre à 36,5% en poids de matière sèche (MS)
   - Préparer une solution de carbonate de sodium à 30% de concentration massique de manière à obtenir une conductivité sur le lait comprise entre 4 et 7 mS/cm.
   - Assurer un temps de contact de 0,5h
   - Filtrer et sécher la fécule de pomme de terre de manière à ce que la conductivité finale sur la poudre remise en suspension à 20% en poids de MS soit de 1.1mS 2)Traitement thermique

Le produit ainsi obtenu est traité thermiquement dans des turboréacteurs continus de type VOMM en série, dont la température de consigne est fixée à 210°C et configurés pour faire subir au produit un temps de séjour de l'ordre de 30 à 48min, et de manière à ce que la différence de température entre la consigne et la température du produit en sortie du réacteur, qu'on appelle Delta T, soit d'une valeur de l'ordre de 19-21 °C.

### Paramètres de process

**[Tableau 10]**

| Exp | Conductivité sur produit après imprégnation remis en suspension à 20% en poids MS en mS/cm | Humidité du produit avant traitement thermique en % | Delta T | T°C consigne | Temps de séjour (min) |
|---|---|---|---|---|---|
| Base fécule de pomme de terre | 0.,15 | 16,8 | 0 | 0 | 0 |
| I-1 | 1,1 | 13 | 21 | 210 | 30 |
| I-2 | 1,1 | 13 | 19,5 | 210 | 48 |

Les mesures de viscosité RVA sont réalisées et sont présentées dans le tableau ci-dessous.

### Résultats :

**[Tableau 11]**

| Essais | RVA Chute (mPa.s) | RVA Pic (mPa.s) |
|---|---|---|
| Base fécule de pomme de terre | 545 | 887 |
| I-1 | -270 | 583 |
| I-2 | -400 | 167 |

Les amidons thermiquement modifiés préparés à partir de fécule I-1 et I-2 présentent une stabilité améliorée durant le process d'utilisation par rapport à la fécule de pomme de terre native : moins de phénomènes de prise en viscosité et de rétrogradation sont observés lors de l'utilisation de ces amidons thermiquement modifiés.

### Exemple 6 : Préparation d'amidons thermiquement modifiés « J-1 » et « J-2 » à partir de fécule de manioc

1)L'alcalinisation de la fécule de manioc est conduite selon les étapes suivantes :
   - Préparer une suspension de fécule de manioc à 36,5% en poids de matière sèche (MS)
   - Préparer une solution de carbonate de sodium à 30% de concentration massique de manière à obtenir une conductivité sur le lait comprise entre 4 et 7 mS/cm.
   - Assurer un temps de contact de 0,5h
   - Filtrer et sécher la fécule de manioc de manière à ce que la conductivité finale sur la poudre remise en suspension à 20% en poids de MS soit de 1mS
2)Traitement thermique

Le produit ainsi obtenu est traité thermiquement dans des turboréacteurs continus de type VOMM en série, dont la température de consigne est fixée à 210°C et configurés pour faire subir au produit un temps de séjour de l'ordre de 20 à 35 min, et de manière à ce que la différence de température entre la consigne et la température du produit en sortie du réacteur, qu'on appelle Delta T, soit d'une valeur de l'ordre de 22-27°C.

### Paramètres de process

**[Tableau 12]**

| Exp | Conductivité sur produit après imprégnation remis en suspension à 20% en poids MS en mS/cm | Humidité du produit avant traitement thermique en % | Delta T | T°C consigne | Temps de séjour (min) |
|---|---|---|---|---|---|
| Base fécule de manioc | 0,10 | 14 | 0 | 0 | 0 |
| J-1 | 1 | 11 | 27 | 210 | 20 |
| J-2 | 1 | 11 | 22 | 210 | 35 |

Les mesures de viscosité RVA sont réalisées et sont présentées dans le tableau ci-dessous.

### Résultats :

**[Tableau 14]**

| Essais | RVA Chute (mPa.s) | RVA Pic (mPa.s) |
|---|---|---|
| Base fécule de manioc | 470 | 610 |
| J-1 | 10 | 350 |
| J-2 | -195 | 95 |

Les amidons thermiquement modifiés préparés à partir de fécule J-1 et J-2 présentent une stabilité améliorée durant le process d'utilisation par rapport à la fécule de manioc native : moins de phénomènes de prise en viscosité et de rétrogradation sont observés lors de l'utilisation de ces amidons thermiquement modifiés.

### Exemple 7 : Utilisation d'amidons thermiquement modifiés « G » et « I-2 » en revêtement transparent (terme « clearcoating ») de frites de pommes de terre.

Pour disposer de produits croustillants et savoureux, qui restent chauds plus longtemps, il est procédé à un enrobage desdits produits avec une recette à base d'amidon.

La formule testée est la suivante :

**[Tableau 15]**

| Ingrédients | Quantité (%) |
|---|---|
| Amidon testé | 61,1 |
| TACKIDEX^{®} C760 (dextrine de pois) commercialisé par la société Demanderesse | 12 |
| Farine de riz ML100 (Rickmers) | 20 |
| NaCl | 5 |
| Bicarbonate de sodium | 0,9 |
| Disodium pyrophosphate | 0,9 |
| Gomme de xanthane F80 | 0.,1 |

En amidon testé, il est entendu :
- Amidon thermiquement modifié « I-2 » selon l'exemple 5
- Amidon thermiquement modifié « G » selon l'exemple 3
- Amidon de pois réticulé stabilisé par voie chimique CLEARAM^{®} LI 4000 commercialisé par la société Demanderesse
- Amidon de pomme de terre natif
- Amidon de pomme de terre di-Phosphate PERFECTAMYL^{®} FFC d'AVEBE
- Amidon de pois natif N-735 commercialisé par la société Demanderesse
- Amidon inhibé thermiquement du commerce.

Le procédé de préparation du clearcoating est le suivant :
Préparation du batter
   - Homogénéisation des poudres
   - Mélange poudre et eau à l'aide d'un « kitchen aid » équipé d'une pâle K, vitesse 1 pendant 10 min
Rapport massique de dilution (1/1,5) = 1 part de poudre et 1,5 part d'eau (température 6-8°C)
Coating des frites
   - Séchage des pommes de terre taillées blanchies
   - Enrobage et égouttage
   - L'excès de batter est retiré à l'aide d'une soufflerie
   - Friture 50 s à 180°C
   - Egouttage
   - Surgélation 1h et stockage à -18°C
Friture finale
   - Friture 2 min 30 à 3 min 30 à 180°C

L'évaluation des différentes frites « clearcoatées » est réalisée par les mesures suivantes :

### 1) Pick-up

Cette mesure fait partie des analyses réalisées en routine sur ce type d'application. Il consiste en l'évaluation de la quantité de batter fixée autour de la pomme de terre après enrobage. La valeur cible doit être comprise entre 10 et 12%. Le % de pick-up = (poids final du substrat enrobé - poids initial du substrat) / poids final du substrat enrobé

### 2) Mesure de viscosité

Cette mesure fait également partie des analyses réalisées en routine. Elle consiste en la mesure de viscosité du batter, la viscosité ayant un lien direct avec le pick-up. Un batter plus épais engendre généralement des valeurs de pick-up plus importante.

Cette mesure est réalisée à l'aide d'un flow cup T828, diamètre 4mmm, de capacité 100mL. La valeur cible est autour de 54-55s.

### 3) Mesure de matière grasse

L'enrobage transparent (anglais : clearcoating) ayant un impact direct sur les échanges entre le substrat et l'huile, les mesures de matières grasses et matières sèches sont un indicateur de la performance de l'enrobage transparent. Deux répétitions sont réalisées

### 4) Mesure de matière sèche

Cette mesure est réalisée à l'aide d'une balance Sartorius sous pression atmosphérique (dispositif MA 40 moisture analyser).

### 5 Caractérisation sensorielle

Les caractérisations sensorielles sont des appréciations subjectives et les commentaires en termes de visuel et de texture (toucher / bouche) ont été réalisée avec une panel interne, préalablement formé pour évaluer la croustillance des frites.

Les résultats obtenus montrent que le remplacement de l'amidon de pois réticulé stabilisé par voie chimique, par de l'amidon thermiquement modifié conforme à l'invention conduit à un enrobage transparent (anglais : clearcoating) de frites remarquablement équivalent.

## Revendications

1. Procédé de production d'un amidon thermiquement modifié comprenant les étapes consistant à :
(i) préparer un lait d'amidon présentant une matière sèche comprise entre 30 et 40 %, de préférence entre 35 et 37 % en poids,
(ii) ajouter une solution d'un agent alcalin à une concentration massique comprise entre 25 et 35 %, de préférence de 30 % de manière à obtenir une conductivité sur le lait comprise entre 4 et 7 mS/cm,
(iii) assurer un temps de contact compris entre 0,5 et 2 heures,
(iv) filtrer et sécher le lait d'amidon de manière à ce que la conductivité de l'amidon séché et remis en suspension à 20% en poids de matière sèche soit comprise entre 0,7 et 2,5 mS/cm,
(v)chauffer ledit amidon séché de manière à le porter à une température de plus de 180°C pendant un temps de séjour compris entre 10 et 40 minutes, plus préférentiellement encore entre 15 et 35 minutes,
la conductivité étant mesurée à l'aide d'un conductivimètre électronique KNICK 703.

2. Procédé selon la revendication 1, **caractérisé en ce que** l'origine de l'amidon est choisie dans le groupe constitué du maïs, du maïs waxy; de la pomme de terre, du manioc et des légumineuses telles que le pois et la féverole, plus préférentiellement du maïs waxy, du pois et de la féverole.

3. Procédé selon la revendication 1, **caractérisé en ce que** l'agent alcalin est préférentiellement choisi dans le groupe constitué de l'hydroxyde de sodium, le carbonate de sodium, le pyrophosphate tétrasodique, l'orthophosphate d'ammonium, l'orthophosphate disodique, le phosphate trisodique, le carbonate de calcium, l'hydroxyde de calcium, le carbonate de potassium, et l'hydroxyde de potassium, pris seul ou en combinaison, et plus préférentiellement encore le carbonate de sodium.

4. Procédé selon la revendication 3, **caractérisé en ce que** la montée en température de l'amidon sec obtenu à l'étape (v) est réalisée dans des dispositifs de type turboréacteurs continus, pour lesquels la température de consigne est fixée à plus de 190°C, de préférence comprise entre 195 et 240°C, et le delta T, défini comme la différence de température entre la température de consigne et la température du produit en sortie du réacteur, est compris entre 15 et 25°C.

5. Amidon modifié thermiquement susceptible d'être obtenu par le procédé selon l'une quelconque des revendications précédentes.

6. Utilisation d'un amidon modifié thermiquement produit par le procédé selon l'une quelconque des revendications 1 à 4, en tant qu'agent épaississant ou agent texturant dans des applications alimentaires.

7. Utilisation d'un amidon modifié thermiquement, selon la revendication 6, en tant qu'agent épaississant ou agent texturant dans les soupes, les sauces, les mayonnaises, dans les desserts comme les yaourts, les préparations de fruits pour yaourts, les laits fermentés brassés, yaourts thermisés, les crèmes dessert, les boissons, les plats préparés, les préparations à base de viande ou de poisson, tel que le surimi.

8. Utilisation d'un amidon modifié thermiquement, selon la revendication 6, comme agent d'enrobage pour la préparation de revêtement transparent de légumes , tels que par exemple des frites de pommes de terre, de produits de viande ou encore de pâtes pour pizzas, beignets ou fonds de tarte, snacks, croquettes, céréales ou agents de panage.

## Patentansprüche

1. Verfahren zur Herstellung einer thermisch modifizierten Stärke, umfassend die folgenden Schritte:
(i) Herstellen einer Stärkemilch mit einem Trockengehalt zwischen 30 und 40 Gew.-%, bevorzugt zwischen 35 und 37 Gew.-%,
(ii) Zugabe einer Lösung eines alkalischen Mittels in einer Massenkonzentration zwischen 25 und 35 %, bevorzugt 30 %, so dass eine Leitfähigkeit der Milch zwischen 4 und 7 ms/cm erreicht wird,
(iii) Einhalten einer Kontaktzeit zwischen 0,5 und 2 Stunden,
(iv) Filtrieren und Trocknen der Stärkemilch, so dass die Leitfähigkeit der getrockneten und wieder in 20 Gew.-% Trockensubstanz suspendierten Stärke zwischen 0,7 und 2,5 ms/cm liegt,
(v) Erhitzen der getrockneten Stärke auf eine Temperatur von über 180 °C während einer Verweilzeit zwischen 10 und 40 Minuten, stärker bevorzugt zwischen 15 und 35 Minuten, wobei die Leitfähigkeit mit einem elektronischen Leitfähigkeitsmessgerät KNICK 703 gemessen wird.

2. Verfahren nach Anspruch 1, **dadurch gekennzeichnet, dass** die Herkunft der Stärke aus der Gruppe gewählt ist, umfassend Mais, Wachsmais, Kartoffeln, Maniok und Hülsenfrüchte wie Erbsen und Ackerbohnen, bevorzugt aus Wachsmais, Erbsen und Ackerbohnen.

3. Verfahren nach Anspruch 1, **dadurch gekennzeichnet, dass** das alkalische Mittel bevorzugt aus der Gruppe gewählt ist, umfassend Natriumhydroxid, Natriumcarbonat, Tetranatriumpyrophosphat, Ammoniumorthophosphat, Dinatriumorthophosphat, Trinatriumphosphat, Calciumcarbonat, Calciumhydroxid, Kaliumcarbonat und Kaliumhydroxid, allein oder in Kombination, und stärker bevorzugt Natriumcarbonat ist.

4. Verfahren nach Anspruch 3, **dadurch gekennzeichnet, dass** der Temperaturanstieg der in Schritt (v) erhaltenen Trockenstärke in kontinuierlichen Turboreaktoren erfolgt, bei denen die Solltemperatur auf über 190 °C, bevorzugt zwischen 195 und 240 °C, eingestellt ist und Delta T, definiert als die Temperaturdifferenz zwischen der Solltemperatur und der Temperatur des Produkts am Ausgang des Reaktors, zwischen 15 und 25 °C liegt.

5. Thermisch modifizierte Stärke, die durch das Verfahren nach einem der vorstehenden Ansprüche erhalten werden kann.

6. Verwendung einer thermisch modifizierten Stärke, hergestellt nach einem der Ansprüche 1 bis 4, als Verdickungsmittel oder Texturgeber in Lebensmittelanwendungen.

7. Verwendung einer thermisch modifizierten Stärke nach Anspruch 6 als Verdickungsmittel oder Texturgeber in Suppen, Saucen, Mayonnaisen, in Desserts wie Joghurt, Fruchtzubereitungen für Joghurt, fermentierten Milchgetränken, thermisierten Joghurts, Dessertcremes, Getränken, Fertiggerichten, Fleisch- oder Fischzubereitungen wie Surimi.

8. Verwendung einer thermisch modifizierten Stärke nach Anspruch 6 als Überzugsmittel zur Herstellung transparenter Überzüge für Gemüse, wie beispielsweise Kartoffelfritten, Fleischprodukte oder Teigwaren für Pizza, Krapfen oder Tortenböden, Snacks, Kroketten, Cerealien oder Panaden.

## Claims

1. A method for producing a heat-modified starch, comprising the steps consisting in:
(i) preparing a starch milk having a solids content of between 30 and 40%, preferably between 35 and 37% by weight,
(ii) adding a solution of an alkaline agent at a weight concentration of between 25 and 35%, preferably of 30% so as to obtain a conductivity on the milk of between 4 and 7 mS/cm,
(iii) ensuring a contact time of between 0.5 and 2 hours,
(iv) filtering and drying the starch milk such that the conductivity of the dried starch resuspended at 20% by weight of solids is between 0.7 and 2.5 mS/cm,
(v) heating said dried starch so as to bring it to a temperature of more than 180°C for a residence time of between 10 and 40 minutes, even more preferentially between 15 and 35 minutes,
the conductivity being mesured with a KNICK 703 electronic conductivity meter.

2. The method according to claim 1, **characterized in that** the origin of the starch is selected from the group consisting of corn, waxy corn, potato, cassava and leguminous plants such as pea and faba bean, more preferentially waxy corn, pea and faba bean.

3. The method according to claim 1, **characterized in that** the alkaline agent is preferentially selected from the group consisting of sodium hydroxide, sodium carbonate, tetrasodium pyrophosphate, ammonium orthophosphate, disodium orthophosphate, trisodium phosphate, calcium carbonate, calcium hydroxide, potassium carbonate, and potassium hydroxide, taken alone or in combination, and even more preferentially sodium carbonate.

4. The method according to claim 3, **characterized in that** the rise in temperature of the dry starch obtained in step (v) is carried out in devices of the continuous turbodryer type, for which the setpoint temperature is set at more than 190°C, preferably between 195 and 240°C, and the delta T, defined as the temperature difference between the setpoint temperature and the temperature of the product at the outlet of the dryer, is between 15 and 25°C.

5. A heat-modified starch obtainable by the method according to any of the preceding claims.

6. Use of a heat-modified starch produced by the method according to any one of claims 1 to 4, as a thickening agent or texturizing agent in food applications.

7. Use of a heat-modified starch according to claim 6, as a thickening agent or texturizing agent in soups, sauces, mayonnaises, in desserts such as yogurts, fruit preparations for yogurts, stirred fermented milks, thermized yogurts, dessert creams, beverages, ready meals, preparations based on meat or fish, such as surimi.

8. Use of a heat-modified starch produced by the method according to claim 6, as a glazing agent for preparing a transparent coating for vegetables, for example potato fries, meat products, or even pizza doughs, donuts or pie bases, snacks, croquettes, cereals or crumb-coating agents.
